# EUROPEAN PATENT APPLICATION

(11) **EP 4 431 851 A1**
(43) Date of publication of application: **18.09.2024**
(21) Application number: 23791627.5
(22) Date of filing: 28.03.2023
(51) Int. Cl.: F26B 3/24, F26B 5/04, F26B 17/00, F26B 17/20, F26B 21/10, F26B 25/00

(54) **PARTICULATE MATTER DRYING METHOD, AND METHOD FOR MANUFACTURING DRYING DEVICE**

(30) Priority: 22.04.2022 JP 2022070916; 21.10.2022 JP 2022169274
(71) Applicant: Nara Machinery Co., Ltd., Tokyo 140-0011 (JP)
(72) Inventor: TAKASHIMA, Hisatsugu, Tokyo 143-0002 (JP); TAMIYA, Takeaki, Tokyo 143-0002 (JP); SHINODA, Koji, Tokyo 143-0002 (JP)
(74) Representative: Stolmár & Partner Patentanwälte PartG mbB
(86) International application number: PCT/JP2023/012478
(87) International publication number: WO 2023/203974

(57) **Abstract**

An object is to provide a drying method for continuous processing under reduced pressure, which affords high drying efficiency by bringing about an ideal fluidized state of a process product, the method including, with a median diameter (D50) of a granular starting material ranging from 1 µm to 1000 µm and under reduced pressure at an absolute pressure of 4 to 30, performing a drying treatment by fluidizing the granular starting material, through heating with a heating medium at a temperature 15 to 120°C higher than the boiling point of a solvent in the granular starting material under the above reduced pressure.

## Description

### [Technical Field]

The present invention relates to a method and a device for drying a granular material, and more particularly to a method and a device for drying a granular material, which involve performing continuous processing under reduced pressure, and relates also to a method for producing a granular material having a specific degree of dryness.

### [Background Art]

Drying operations can be roughly classified depending on a heat transfer method involved, and on a method resorted to for eliciting contact with an object to be processed; herein there are various schemes depending, for instance, on the combination of these methods, and depending on a combination with the method for transporting an object to be treated. Heat transfer methods include direct heating, indirect heating, and heating by electromagnetic waves. Methods for contact with the object to be treated include methods of stationary type, of airflow type, of stirring type and of fluidized bed type. Schemes are resorted to for imparting efficiently thermal energy, in a drying operation, with a view to promoting evaporation of water or a solvent (moisture remaining in the object to be treated, or any liquid used as a solvent, or dispersion medium in the production process, provided that this liquid is used generally as a solvent). Various ongoing studies are addressing, for instance, reductions in pressure, with a view to lowering the boiling point of the solvent.

The drying operation comes in a final process, in the production of materials for industrial products, and accordingly exerts a significant influence on the quality of such products. Hence, it is not enough to simply chase drying efficiency, and it is thus necessary, for instance, to reduce also the content of volatile components, such as volatile organic compounds (hereinafter referred to as "VOCs") as much as possible. Meeting such strict demands contributes to raising the commercial value of industrial products that are produced from process powders.

Various drying systems have been therefore studied with a view to enhancing drying efficiency and increasing commercial value of process products. For instance, fluidized bed drying systems are an example of a drying system used in materials for industrial products.

In fluidized bed drying systems hot air is blown upwards from a distribution plate such as a perforated plate, to fluidize a granular starting material, so that, as a result, both contact with hot air and movement of evaporated matter can be carried out efficiently, while also removal of volatile components such as VOCs is likewise facilitated. A fluidized bed drying system is also advantageous in that the equipment body has no movable parts, which is beneficial for easier maintenance. A fluidized bed drying system allows processing continuously a large amount of process powder, by adopting a scheme in which, for instance, the equipment is partitioned into a plurality of drying chambers, a given amount of process powder is supplied to an initial drying chamber, is caused to move to a subsequent drying chamber through a gap at the bottom of a respective partition plate, and is then caused to overflow and be discharged from a final drying chamber.

On the other hand, problems of fluidized bed drying systems include, for instance, increased device size and increased exhaust quantities. In general, VOCs derived from monomers from a starting material of process powder become mixed into exhaust gas during a drying operation, obviously in organic solvent drying operations, but also water drying operations; therefore, regenerative thermal oxidizers (hereinafter referred to as "RTO"), which allow removing VOCs, have been introduced in an exhaust process in drying systems. However, fluidized bed drying systems incur high exhaust flow rates, and accordingly are problematic in terms of the equipment cost and running costs of the RTO.

High-temperature drying is not suitable for drying of substances having a low thermal decomposition point, substances having a low softening temperature, or substances having a low melting point. Further examples of drying systems used for drying such process powders include vacuum drying systems in which drying is performed under vacuum or reduced pressure.

Vacuum drying systems are advantageous in that, by virtue of performing drying under vacuum or reduced pressure, the system allows evaporating and drying a solvent in a process powder without raising the temperature of the process powder, and allows easily reducing the amount of components that tend to remain in the powder, such as VOCs. On the other hand, it is difficult for a large quantity of heat to be transferred, under reduced pressure, relying only on heating with hot air; hence, drying is performed by concomitantly relying on conduction heat transfer, for instance from the casing of a dryer, and by warming the solvent to be dried, up to near the boiling point thereof. Further, vacuum drying systems are problematic in that it is difficult to continuously introduce and discharge a process powder, and accordingly vacuum drying systems are not suitable for mass processing.

One of the most efficient heat transfer methods that allows for mass processing involves using hot air, as in a fluidized bed drying system; however, relying on reduced pressure such a fluidized bed drying system entails the difficulty of reconciling fluidization and heat transfer by hot air, with a vacuum environment or a reduced pressure environment.

As mentioned above, fluidized bed drying systems exhibit high drying efficiency, are capable of continuously processing large quantities of process product, and allow obtaining high-quality process products having had volatile components such as VOCs removed therefrom; however, fluidized bed drying systems are sizable, and incur a substantial environmental impact.

On the other hand, although vacuum drying systems are an effective means for process products that are not amenable for drying at high temperatures, and are also suitable for removal of volatile components such as VOCs, such systems are however problematic in not being easily amenable for continuous processing, and thus not being suitable for mass processing.

In view of the above considerations, systems have been studied that exploit the advantages of vacuum drying while allowing for continuous processing.

For instance PTL 1 discloses a continuous vacuum drying method for a granular product, wherein a granular product having been brought to a vacuum state in a preliminary vacuum chamber is continuously fed to a rotary drum that rotates within a vacuum chamber, and the granular product is dried by being caused to move along a ribbon-shaped screw provided on the inner surface of the rotary drum, followed by retrieval of the granular product in a state where pressure has been reverted to normal pressure in a vacuum release chamber.

PTL 2 discloses a water-containing product drying device provided with: a dryer body, into the depressurized interior of which a water-containing product is supplied, and in which the water-containing product is transported in a given direction while being heated; and a storage hopper provided so that the interior thereof communicates with the interior of the dryer body, downstream of the dryer body, along the transport direction of the water-containing product, the storage hopper having an opening/closing mechanism that allows closing and opening, in an airtight manner, a discharge port for discharge of the water-containing product.

PTL 3 and PTL 4 ca be likewise cited as drying systems that focus on fluidization of a process product, with a view to enhancing heat transfer efficiency.

PTL 3 discloses a method for drying a high-moisture-content substance, the method involving holding, in a reduced pressure state, the interior of a closed-type chamber having a heating jacket and a stirring blade that allows fluidizing a product under drying, and maintaining the moisture of the product under drying within a range that allows for fluidization. However, PTL 3 explains that a heat transfer coefficient is improved by fluidization, and states "Given that upon drying in accordance with the method of the present invention the properties of the product under drying change in various ways during drying, a relationship between the moisture content and the properties was therefore investigated, in particular a case where the product under drying was vigorously stirred within a drying chamber. It was found as a result that when the moisture content is about 40% or less, the product under drying begins to flow as a result of such vigorous stirring, while at about 30% or less, the product becomes fluidized as a result of vigorous stirring in a manner wholly similar to that of a fluidized bed". As disclosed in PTL 3, thus, the technology of PTL 3 amounts merely to prescribing a moisture content to lie within a specific range, and to fluidizing the process product through application of a stirring force. PTL 3 describes processing conditions that include processing at 66°C and 200 Torr, such that processing is performed under conditions substantially equal to those of a saturated vapor pressure of water.

PTL 4 discloses a method for producing dry SPG, using a dryer that has at least an inlet for a powder of 3,9-bis(1,1-dimethyl-2- hydroxyethyl)-2,4,8,10-tetraoxaspiro[5,5]undecane (hereinafter referred to as "SPG") wetted with a solvent, a discharge port for dried SPG powder, a means for fluidization of the wet powder, and a jacket on the outer wall of the dryer, so as to indirectly heat up the wet powder by causing a heating medium, in a temperature range from the boiling point of the solvent up to 190°C, to pass through the jacket. PTL 4 states "The powder fluidizing means may be a stirring blade that rotates about an axis, or alternatively the dryer itself may rotate, or a dryer body may vibrate. Examples of stirring blades include paddle blades, anchor blades, ribbon blades and the like". As disclosed in PTL 4, the term "fluidization" has thus a technical meaning to the effect that a process powder is stirred, and caused to flow, as a result of the action of a stirring force and a rotational force. PTL 4 states "Preferably the temperature of the heating medium is higher by 15°C or more than the boiling point of the solvent; dry SPG having a solvent amount not higher than 0.5 wt% can be obtained by setting thus the temperature of the heating medium to be higher, by 15°C or more, than the boiling point of the solvent". However, PTL 4 does not disclose or suggest a relationship between pressure reduction and/or heating temperature and "fluidization", while all examples in PTL 4 are carried out at normal pressure.

### [Citation List]

### [Patent Literature]

[PTL 1] Japanese Patent Application Publication No. S56-127168 [PTL 2] Japanese Patent Application Publication No. 2011-163602
[PTL 3] Japanese Patent Application Publication No. H06-50659 [PTL 4] Japanese Patent Application Publication No. 2003-55383

### [Summary of Invention]

### [Technical Problem]

However, the drying methods disclosed in PTL 1 and PTL 2 above merely enable continuous processing under reduced pressure, with no improvement in terms of heat transfer mechanism. Therefore, the drying system did not afford a practical level of drying capability for mass processing.

Fluidization of a process product as disclosed in PTL 3 and PTL 4 is a state resulting from applying a stirring force or rotational force to the process product, in other words, is a state in which the process product becomes scattered through motion, and thus is not a state that is brought about through the ideal process product fluidization described below. No dramatic improvement in heat transfer efficiency could therefore be expected.

In the light of the issues in conventional art described above, it is an object of the present invention to provide a granular material drying method and a granular material drying device for drying a granular material through continuous processing under reduced pressure while obtaining high drying efficiency by achieving an ideal fluidized state of a process product, and to further provide a method for efficiently producing a granular material having a specific degree of dryness.

### [Solution to Problem]

For the purpose of achieving the above goal, the present invention is a granular material drying method and a granular material drying device, and further a method for producing a granular material, according to [1] to [5] below.
[1] A granular material drying method, in which a granular starting material is continuously supplied, and under reduced pressure, a heating medium is supplied to a stirring means, to subject the granular starting material to a drying treatment through heating while under stirring, the method including, with a median diameter (D50) of the granular starting material ranging from 1 µm to 1000 µm and under reduced pressure at an absolute pressure of 4 to 30 kPa, performing a drying treatment by fluidizing the granular starting material, through heating with the heating medium at a temperature 15 to 120°C higher than the boiling point of a solvent in the granular starting material under the above reduced pressure.
[2] The granular material drying method according to [1], wherein a moisture content of the granular starting material is from 10 to 70 mass%.
[3] A granular material drying device, used in the method for drying a granular material according to [1], the drying device comprising: a casing; a supply port provided at a top of one end of the casing; and a discharge port provided at a bottom of another end of the casing, wherein the casing is connected to a pressure reducing means capable of depressurizing the interior of the casing, a rotatable hollow shaft is spanned within the casing, a hollow stirring means is disposed at predetermined intervals in the hollow shaft, and a granular starting material is heated under reduced pressure and under stirring, through supply of a heating medium to the hollow shaft and hollow stirring means.
[4] The granular material drying device according to [3], comprising an airlock valve including a valve casing provided at a supply port and a discharge port of the casing and having an inflow port opened upward and an outflow port opened downward; and a valve that is rotatably provided at a position for closing the inflow port and at a position for closing the outflow port within the valve casing, the airlock valve being able to supply and discharge a granular material in an airtight state through rotation of the valve.
[5] A granular material production method, including producing a granular material that has a moisture content of 1.0 mass% or less in accordance with the granular material drying method according to [1] or [2].

### [Advantageous Effects of Invention]

The granular material drying method and granular material drying device according to the present invention allow constructing a drying system having a practicable level of drying capability that allows for mass processing. The granular material production method according to the present invention allows producing a dry granular material having had volatile components such as VOCs reduced as much as possible.

### [Brief Description of Drawings]

[Fig. 1]

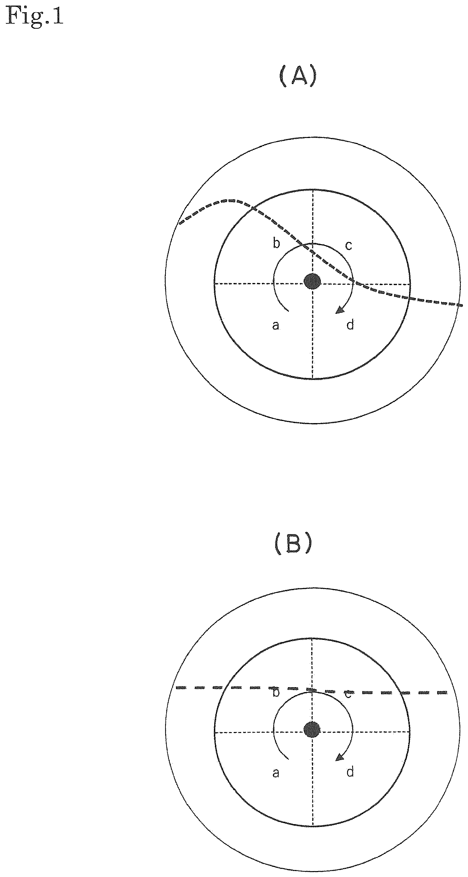

   Fig. 1 is a set of diagrams illustrating conceptually a relationship between a stirring means and a powder surface within a dryer, where (A) is a diagram illustrating a powder surface in a general fluidized state, derived from stirring, and (B) is a diagram illustrating a powder surface in an ideal fluidized state.
[Fig. 2]

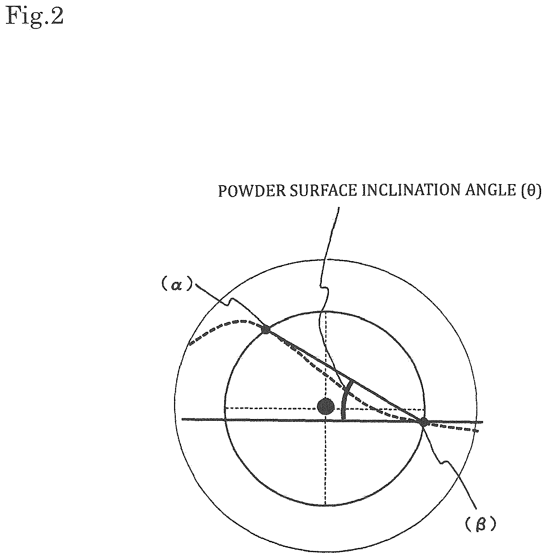

   Fig. 2 is a diagram illustrating conceptually a method for measuring a powder surface inclination angle (Θ) of a powder surface in a fluidized state.
[Fig. 3]

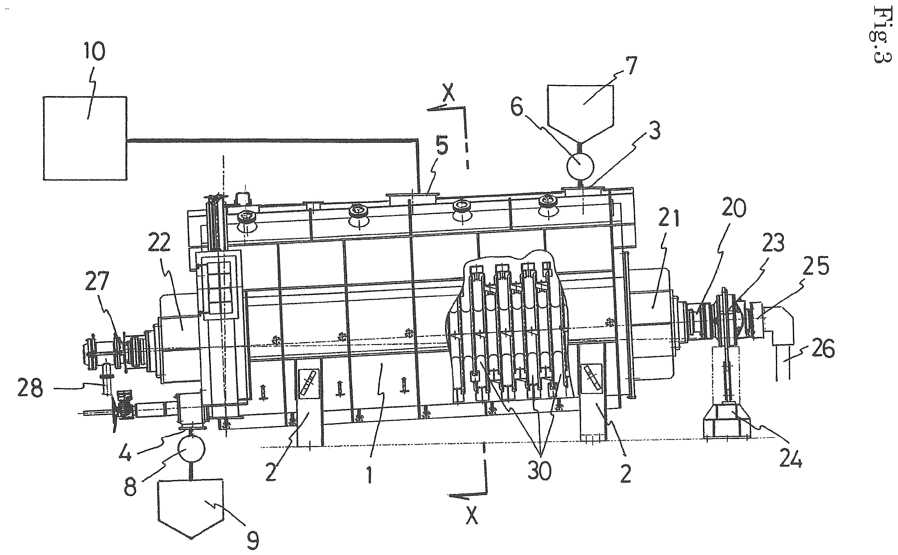

   Fig. 3 is a partial cutaway side-view diagram illustrating an embodiment of a drying device used in the drying method of the present invention.
[Fig. 4]

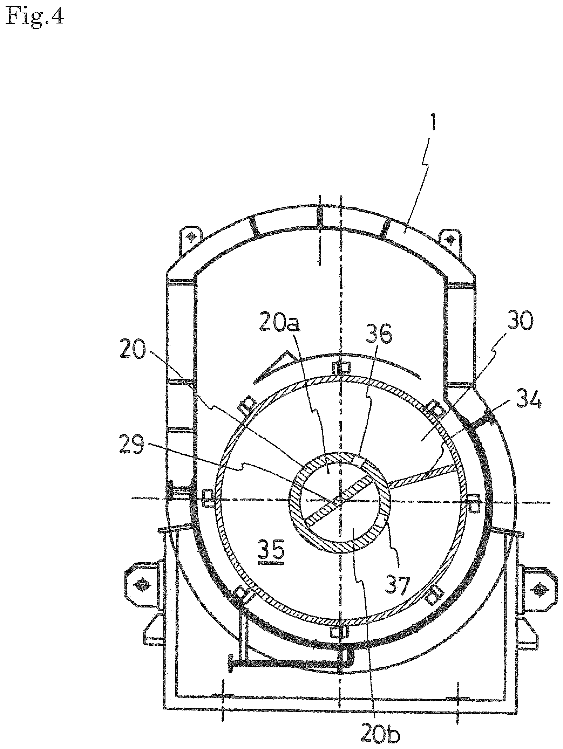

   Fig. 4 is an enlarged cross-sectional diagram of a portion along line X-X of Fig. 3.
[Fig. 5]

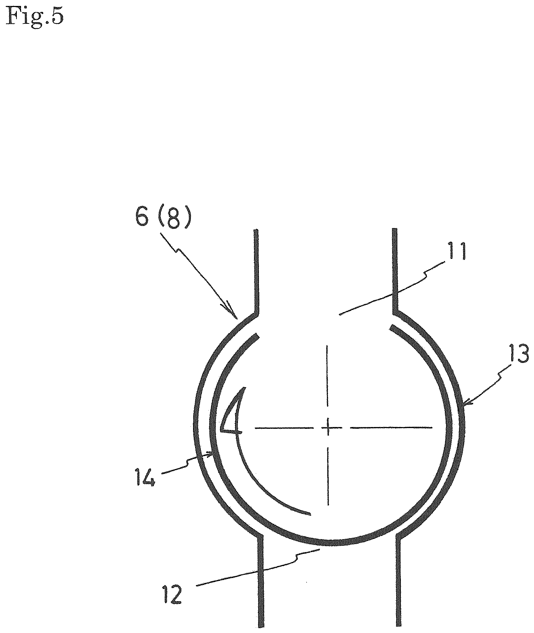

   Fig. 5 is a conceptual configuration diagram of an airlock valve.
[Fig. 6]

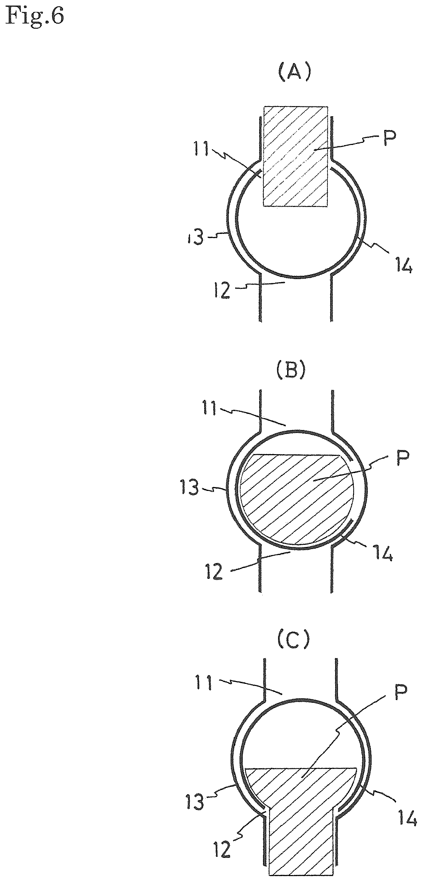

   Fig. 6 is a diagram illustrating a feeding process of a process product of an airlock valve.
[Fig. 7]

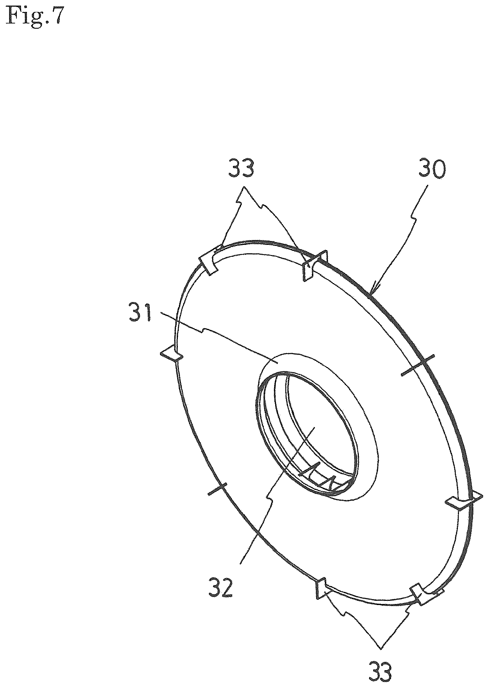

   Fig. 7 is a perspective-view diagram of a stirring means.
[Fig. 8]

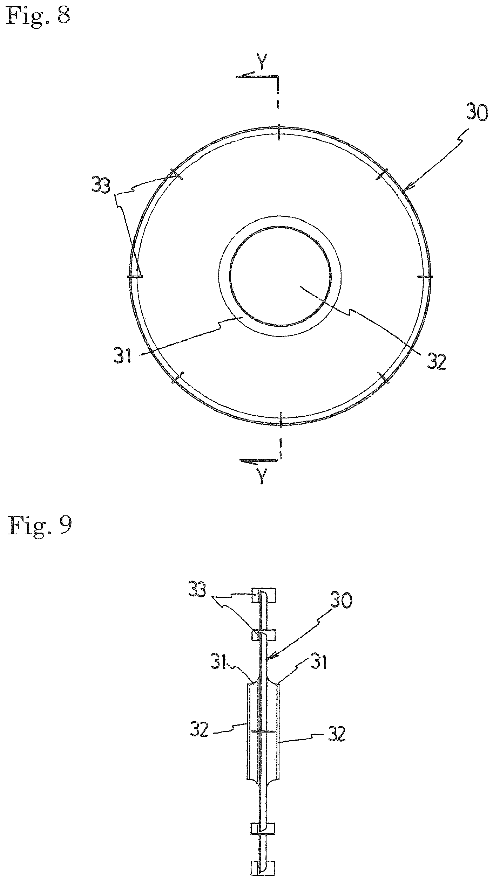

   Fig. 8 is a front-view diagram of a stirring means.
[Fig. 9]
   Fig. 9 is a side-view diagram of a stirring means.
[Fig. 10]

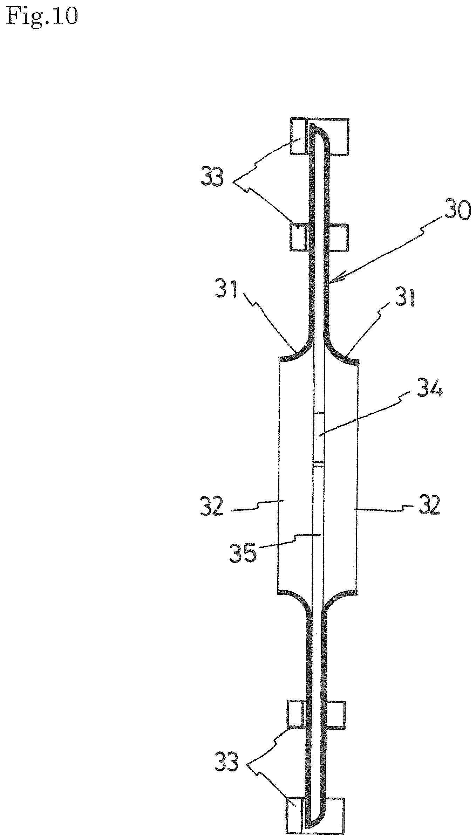

   Fig. 10 is an enlarged cross-sectional diagram of the portion along line Y-Y of Fig. 8.
[Fig. 11]

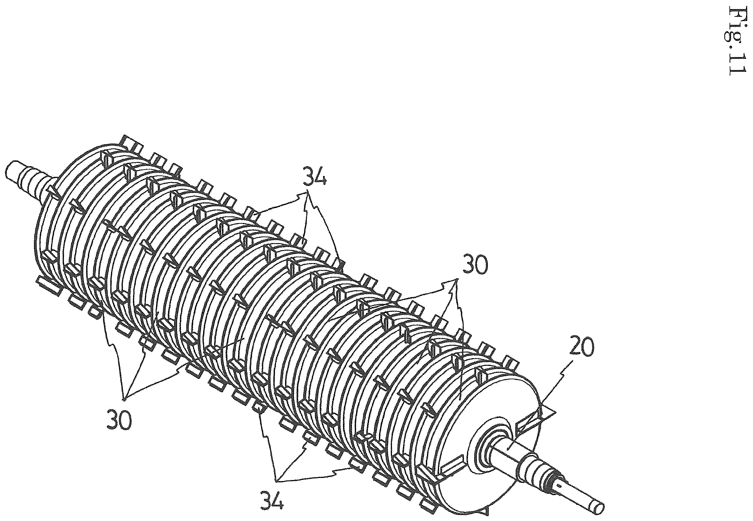

   Fig. 11 is a perspective-view diagram illustrating a state in which a stirring means is disposed on a shaft.

### [Description of Embodiments]

The inventors perfected the present invention not only by making continuous processing possible in vacuum drying, but also by re-examining in a profound manner the heat transfer mechanism of vacuum drying. As a characterizing feature of the present invention, a median diameter (D50) of a granular starting material ranges from 1 µm to 1000 µm; and a continuous drying treatment is carried out in which ideal fluidization of a granular material is achieved through heating of the granular starting material under reduced pressure at an absolute pressure of 4 to 30 kPa, using a heating medium at a temperature 15 to 120°C higher than the boiling point of a solvent in the granular starting material under the above reduced pressure.

A systematization of the formation of powder fluidized beds may be helpful in understanding the explanation of the present invention as pertains to "fluidization".

In a fluidized bed drying system, hot air is blown up from a distribution plate such as a perforated plate. When the amount of air blown up is small, some powder remains in a fixed bed. As the amount of air is increased, the surface of the powder bed begins to bubble up, at some point in time, on account of air bubbles. Fluidization in a broad sense starts at this point in time. As the amount of air is further increased, particles begin to float and jiggle up and down, whereby the height of the powder surface rises beyond what it was in the fixed bed.

Channeling and bubbling are examples of phenomena that accompany fluidization in a broad sense. Channeling denotes a phenomenon whereby gas that is generated or supplied does not become dispersed uniformly throughout the powder bed, but intermittently blows through part of the bed. Bubbling denotes a phenomenon whereby gas that is generated or supplied to the bottom of the powder bed, or into the powder bed, rises as-is, within the bed, in the form of bubbles.

In assessing the state of fluidization of a process powder in a drying operation, it is considered that an ideal fluidized state in a fluidized bed drying system is a state in which a gas is uniformly dispersed within the powder bed, in terms of contact with hot air and transfer of evaporated matter. In such a case the powder bed takes on a relatively smooth powder surface state, depending on the amount of gas that is generated or supplied.

The fluidization disclosed in PTL 3 and PTL 4 in the background art section denote a state in which a stirring force and/or rotational force is exerted to a granular material, in other words, a state of granular material being scattered on account of motion. This is different from the ideal fluidized state described above in which a gas and a treated granular material are in a uniformly dispersed state.

PTL 4 discloses a dryer of conductive heat transfer type in which a heating medium is caused to pass through a stirring means, and wherein heat transfer efficiency is improved through fluidization of the process product by stirring. Overall, the influence of changes in the state of a granular material accompanying stirring includes ostensibly an effect of enhancing heat exchange efficiency, and an effect of facilitating smooth solvent evaporation, elicited through an increase in the number of occurrences of contact between the process powder and a heat transfer surface, by virtue of the fact that the process powder is in a scattered state brought about by motion. However, studies by the inventors have revealed that fluidization elicited by such stirring is not only insufficient, as a state of fluidization, but also gives rise to oscillation of the powder bed accompanying stirring, exposure of the heat transfer surface, and occurrences of large cavities within the powder bed, which in consequence result in a reduction in the heat transfer surface that is in contact with the powder; such fluidization is thus no solution in terms of improving heat transfer efficiency.

Fig. 1(A) conceptually illustrates a relationship between a stirring means within a dryer and a powder surface. To facilitate understanding, the stirring means is depicted in the figure in the form of a perfect circular disk; the locus of the outermost periphery during rotation about a rotation axis may be envisaged herein as tracing a perfect circle, even when using a stirring means of asymmetrical shape.

Dividing the stirring means into regions a to d in the upper, lower, right, and left directions, as illustrated in the figure, the process powder is lifted, as the stirring means rotates, in the vicinity of region b, and as a result and the powder surface surges up with force on the upstream side of rotation. In the vicinity of region c, on the downstream side of rotation, the powder surface conversely sinks down, thus giving rise to a biased powder surface. This of the powder surface bias increases as the rotational speed increases. When a raking member or the like is used to promote stirring, the powder surface may also oscillate periodically, in addition to being biased towards the powder surface.

The heat transfer surface becomes exposed, at region c, when the above biasing or oscillation occurs. Large cavities form instantaneously and continuously within the powder bed, such that the heat transfer surface cannot come into contact with the process powder at those sites where cavities have formed. When the rotational speed of the stirring means is significantly reduced, for the purpose of suppressing the occurrence of the above biasing and oscillation, the heat exchange efficiency between the process powder and the heat transfer surface drops, and heat transfer efficiency likewise decreases. Powder surface bias or oscillation occurs also in a case where the powder surface is raised through an increase in the amount of the process powder that is inputted, without modifying the rotational speed of the stirring means. In this case there decreases the number of times that the process powder and the heat transfer surface come into contact with each other, per unit time and per unit weight, and heat transfer efficiency likewise decreases. This drop in heat transfer efficiency was observed to be more pronounced in a conduction heat transfer dryer having a single shaft than in a conduction heat transfer dryer equipped with a plurality of shafts as stirring means.

The present invention provides a fundamental improvement to the above problem by bringing about a state in which a process powder fluidizes spontaneously even without application of kinetic energy such as a stirring force or rotational force. The fluidized state in the present invention is characterized in that a powder bed becomes fluidized with uniform rising, such that the powder surface does not oscillate but remains flat, even upon stirring, and such that the slant of the powder surface derived from stirring is gentle; as illustrated in Fig. 1(B), the oscillation of the powder surface is curtailed and the surface becomes flattened, while at the same time, the inclination angle formed by the powder surface is small.

As defined in Table 1, the fluidized state of the present invention denotes a state in which the powder surface during operation of the dryer is rated as a Rank 5 or Rank 4.

### [Table 1]

The powder surface inclination angle (θ) in the table is the angle (see Fig. 2) formed by the horizontal plane and a straight line that joins a site (α) of highest rise of powder surface on the rotation upstream side, and a site (β) of lowest depression of the powder surface on the rotation downstream side, within a perfect circle formed by the locus of the outermost periphery of the stirring means upon rotation thereof in the drying operation of the process powder. In a case where the powder surface is not stable and but oscillates sharply, a video image thereof is captured, the powder surface inclination angle (θ) is worked out for each frame, and the maximum value obtained is taken as the powder surface inclination angle (θ).

The rotation conditions of the stirring means include 0.03 to 0.8 m/s, preferably 0.25 to 0.63 m/s, as the linear velocity of the outermost periphery; however, the powder surface inclination angle (θ) is defined not only by the above rotation conditions but also by the state of the powder surface during operation of the dryer.

For the instances ranked 1 to 3 in Table 1 it was observed that even if the powder surface is raised by increasing the input amount, the granular material still scatters accompanying stirring at the linear velocity of the stirring means within the above range, such that the powder surface becomes upset, and no longer flat, on account of stirring, or alternatively the powder surface inclination angle (Θ) is not 20 or smaller, and thus the state in rank 4 or 5 is not reached.

On the other hand it was found that when the process powder is subjected to a heating treatment by way of a stirring means under an absolute pressure of 30 kPa or less, using a heating medium at a temperature higher by 15°C or more than the boiling point of the solvent in the process product under the above reduced pressure, the liquid in the interior of the powder bed evaporates instantly and a gas is generated as a result, and the powder bed is brought to a fluidized state of rank 4 or 5. By bringing about such a fluidized state, the generated gas moves readily, even in a reduced pressure state, and the process powder is not only in motion, but also maintains contact with a heating means, and as a result heat transfer efficiency increases dramatically, and processing capacity is achieved that is not achievable using conventional vacuum dryers. In particular, the effect of improving throughput by bringing about the above fluidized state is pronounced in a conduction heat transfer dryer made up of a single shaft, which is suitable from the viewpoint of achieving a more compact device.

Drying has conventionally been accomplished relying on a combination of reduced pressure and heating; the technical rationale for doing so was to lower the boiling point of the solvent through pressure reduction, so that drying could be carried out efficiently at lower temperatures. Therefore, although excess heat may be imparted at normal pressure, processing is performed at a temperature near the boiling point of the solvent in a case where the pressure is reduced to or below a certain level; it is thus considered, given the purpose of drying at a lower temperature, that there is not exceptional impediment to applying excess heating after pressure reduction.

Fluidization in a broad sense occurs on account of boiling of the solvent even at normal pressure, depending on the temperature, but gas generation arising from evaporation is nonuniform and is accompanied by intermittent channeling; such fluidized state remains at rank 1 in the above fluidization ranking, and is different from the fluidized state of the present invention.

In order to achieve the fluidized state of the present invention it is necessary to create a reduced pressure state at an absolute pressure of 30 kPa or less, such that when this reduced pressure state is released, the powder begins to oscillate, through stirring, upon termination of the fluidized state; the fluidized state of the present invention has therefore proved not to arise from the stirring force. In order for the powder bed to become uniformly fluidized through generation of gas derived from instant evaporation of a liquid in the interior of the powder bed it is necessary to perform heating under reduced pressure conditions of 30 kPa or less, using a heating medium at a temperature higher by 15°C or more than the boiling point of the solvent under that reduced pressure. The decomposition point and melting point of the process product must be factored in for the upper limit of the heating temperature; herein working examples have revealed that fluidization in the present invention is possible up to a value of 120°C of a difference (ΔT) between the heating medium temperature and the boiling point of the solvent under reduced pressure. From the viewpoint of thermal stability of the process product, the above ΔT ranges preferably from 15 to 100°C, preferably from 15 to 70°C. At a temperature below 15°C, fluidization in a broad sense does take place, but gas generation is insufficient, and channeling occurs. In terms of achieving stable fluidization, the temperature is preferably 20°C or higher; taking this into account, ΔT lies preferably in the range from 20 to 100°C, most preferably from 20 to 70°C.

The granular starting material to be treated in accordance with the drying method according to the present invention is not restricted in any way; the present invention can be widely used in drying of synthetic resins, foods, chemicals or the like. However, the median diameter (D50) of the granular starting material to be treated ranges from 1 µm to 1000 µm. When D50 exceeds 1000 µm, the process powder becomes excessively heavy, and spontaneous fluidization does not readily occur, even under the above heating conditions under reduced pressure. When by contrast D50 is smaller than 1 µm, there are numerous fine powder particles, having a diameter of about 1 µm or less, that exhibit strong cohesiveness, and in consequence continuous fluidization does not readily occur. From the above viewpoints, the median diameter (D50) of the granular starting material to be treated ranges preferably from 100 um to 800 µm, more preferably from 150 um to 700 µm. The moisture content of the granular starting material to be treated is preferably from 10 to 70 mass%, more preferably from 20 to 60 mass%, and yet more preferably from 20 to 50 mass%, from the viewpoint of achieving uniform fluidization. When the moisture content is less than 10 mass%, fluidization ends in a short period of time, and a sufficient effect of improving drying capacity fails to be observed. When the moisture content exceeds 70 mass%, uniform fluidization occurs yet less readily. In a case where the granular starting material to be treated does not have the above median diameter or moisture content, there is preferably carried out a pretreatment, to elicit adjustment to a granular starting material having the above median diameter or moisture content. The relevant pretreatment involved is not limited in any way, and widely known pulverization methods and moisture adjustment methods can be resorted to.

The moisture content in the process powder may include moisture remaining in the object to be treated, or any liquid used as a solvent or dispersion medium in the production process, provided that this liquid is used ordinarily as a solvent. Herein there can be used for instance water; lower alcohols such as methanol, ethanol, propanol and isopropanol; polyhydric alcohols such as glycerin, ethylene glycol monoethyl ether, propylene glycol and 1,3-butylene glycol; lower ketones such as acetone, methyl ethyl ketone and methyl isobutyl ketone; lower esters such as ethyl acetate and isopropyl acetate; lower ethers such as diethyl ether and diisopropyl ether, as well as mixtures of two or more of the foregoing. In a case where multiple types of solvents are present, the fluidized state of the present invention is achieved if at least one of the solvents satisfies the above condition, namely heating under reduced pressure, at an absolute pressure of 4 to 30 kPa, and at a temperature 15 to 120°C higher than the boiling point of the solvent under the above reduced pressure. In a case where an azeotropic mixture is generated, an azeotropic point according to the relevant ratio is used as a reference.

Preferably, the heating means of the process powder is a conduction heat transfer dryer made up of a hollow shaft and a hollow stirring means, and being configured to indirectly heat up the process powder through circulation of a heating medium within the heating means. Besides the above heating means, heating may also be accomplished from a casing. A disk-shaped stirring means, a paddle-shaped stirring means or a screw-shaped stirring means can be used as the stirring means. However, a disk shape is preferably adopted that can secure the widest heat transfer surface of contact with the process powder; raking members or pins may be disposed on the stirring means, as needed. The effect of improving processing capacity is more pronounced than that in a conduction heat transfer dryer in which stirring means are arranged on multiple shafts; preferably, the conduction heat transfer dryer is configured to have a stirring means disposed on a single shaft, from the viewpoint of making the device more compact.

In the present invention, preferably, the fluidized state of the present invention arises in at least 1/5 of the length of the path over which the heating means and the process powder come into contact with each other. The fluidized state of the present invention is no longer brought about once constant-rate drying is over, through evaporation of most of the moisture content (solvent); in consequence there is a changeover to decreased rate drying in a partial downstream region of the above path length, and the fluidized state of the present invention does not arise.

An embodiment of a drying device used in the above-described drying method of the present invention will be explained in detail next with reference to accompanying drawings.

Fig. 3 is a partial cutaway side-view diagram of a drying device, and Fig. 4 is an enlarged cross-sectional diagram of a portion along line X-X of Fig. 3.

In the figures, the reference numeral 1 denotes a casing of a drying device made up of a comparatively horizontally-elongated vessel. The casing 1 is installed in a slightly slanted state, by a support stand 2. A supply port 3 for the process product is provided at the upper front end of the casing 1, and a discharge port 4 of the process product is provided at the rear end bottom. An exhaust port 5 is provided in the top of the casing 1.

The supply port 3 of the process product provided in the casing 1 is connected to a starting material hopper 7 via an airlock valve 6 into which the process product is continuously inputted. The discharge port 4 is connected to a recovery hopper 9 via an airlock valve 8 through which the process product is continuously discharged. The exhaust port 5 provided in the casing 1 is connected to an exhaust pressure reducing unit 10.

As the configuration thereof, as illustrated conceptually in Fig. 5, the airlock valve 6 (or 8) is made up of a valve casing 13 provided with an inflow port 11 opened on the upper side and an outflow port 12 opened on the lower side, and a valve 14 that is rotatably provided within the valve casing 13, at a position for closing the inflow port 11 and at a position for closing the outflow port 12. In a state where only the outflow port 12 is closed by the valve 14 (state in (A) of Fig. 6), the process product P is taken from the starting material hopper 7 (or casing 1 of drying device) into the valve casing 13, via the inflow port 11; through rotation of the valve 14, a state is brought about thereupon in which both the outflow port 12 and the inflow port 11 are closed by the valve 14 (state in Fig. 6 (B)), and subsequently a state in which only the inflow port 11 is closed (state in Fig. 6 (C)), such that the process product P taken into the valve casing 13 can be inputted into the casing 1 of the drying device (or discharged to the recovery hopper 9), through the outflow port 12.

The exhaust pressure reducing unit 10 has the role of venting steam from the interior of the casing 1 of the drying device, and reducing thus the pressure inside the casing 1. This exhaust pressure reducing unit 10 includes for instance dust removal equipment such as a bag filter, for removing dust contained in exhaust from the casing 1, a condenser that cools and condenses steam contained in the exhaust, a pressure reducing means for reducing the pressure inside the casing 1, and deodorizing equipment for eliminating exhaust odor. The pressure reducing means can be a pump, an aspirator or the like. The deodorizing equipment can be a metal catalyst, a filter, activated carbon or the like. Preferably, the exhaust pressure reducing unit 10 is provided with at least a pressure reducing means and deodorization equipment.

A hollow shaft 20 that passes through the front and rear of the casing 1 of the drying device is rotatably supported on bearings 21 and 22 that are provided at the front and the rear of the casing 1. A sprocket 23 is provided at the front of the hollow shaft 20, such that rotation of a motor 24 is transmitted to the hollow shaft 20 via a chain that meshes with the sprocket 23. A direct drive with direct motor coupling may be resorted to, and a hydraulic motor may also be used as the motor.

A heating medium supply pipe 26 is connected to the front end of the hollow shaft 20 via a rotary joint 25, and a heating medium discharge pipe 28 is similarly connected to the rear end of the hollow shaft 20 via a rotary joint 27. The hollow shaft 20 has provided therein a partition plate 29 that partitions the interior of the hollow shaft 20 into two parts in the axial direction, as illustrated in Fig. 4. The interior of the hollow shaft 20 is divided by the partition plate 29 into a primary chamber 20a and a secondary chamber 20b. The primary chamber 20a communicates with the front of the hollow shaft 20, and the secondary chamber 20b communicates with the rear of the hollow shaft 20. Although this state is not specifically depicted in the figures, the above configuration can be realized if the front end of the secondary chamber 20b at the front of the hollow shaft 20, and the rear end of the primary chamber 20a at the rear of the hollow shaft 20, are sealed with semicircular end plates.

Multiple hollow stirring means 30, 30,... are disposed at regular intervals on the hollow shaft 20. As illustrated in Fig. 7 to Fig. 10, the hollow stirring means 30 are each formed in the shape of a disk that is thinner than the disk diameter. In further detail, each hollow stirring means 30 is formed to a thin, substantially hollow disk shape with parallel plate surfaces, and having, at the center, circular concentric protrusions 31, 31 that are gently curved in the left-right direction when viewed from the side, and openings 32, 32 that are formed at the tips of respective protrusions 31, 31.

As depicted in the figures, multiple raking blades 33 are attached, at equal intervals, on the outer periphery of the disk-shaped hollow stirring means 30. In the illustrated embodiment, the raking blades 33 are attached to respective stirring means 30, but depending on the physical properties of the process product, the raking blades (not shown) may be attached running through between two or more adjacent stirring means 30, 30. Conversely, the raking blades may be absent.

A partition plate 34 is attached in the interior of the hollow stirring means 30, as illustrated in Fig. 4, Fig. 8, and Fig. 10, such that an internal space 35 of the stirring means 30 is partitioned by the partition plate 34. Flow is formed in that the heating medium which flows into the internal space 35 of the hollow stirring means 30 via the communication hole 36, from the primary chamber 20a of the hollow shaft 20, circulates in a given direction within the internal space 35, and flows out of the secondary chamber 20b of the hollow shaft 20 via a communication hole 37. In the case of a comparatively small device, one partition plate 34 may suffice, whereas in a case however of a large device, the internal space 35 of stirring means 30 may be further sub-partitioned by a plurality of partition plates 34, with a corresponding increase in the number of partition plates 29 that partition the hollow shaft 20; similarly, communication holes 36, 37 may be provided for communication between the partitioned secondary chamber 20b and the primary chamber 20a of the hollow shaft 20 and the partitioned internal space 35.

As illustrated in Fig. 11, a large number of the hollow stirring means 30 having the above configuration are disposed at regular intervals on the hollow shaft 20, so that the raking blades 33 of the hollow stirring means 30 are juxtaposed in a same direction. This spacing between the stirring means is ensured herein through mutual abutting of the tips of the protrusions 31, 31 of adjacent stirring means 30, 30, upon insertion of the hollow shaft 20 into the openings 32 of the stirring means 30. The number of hollow shafts 20 is not limited to one, and may be for instance two or more. As pointed out above it is however preferable to use only one hollow shaft 20, from the viewpoint of significantly increasing processing capacity and rendering the device more compact. The hollow stirring means 30 disposed on the hollow shaft 20 may be disk-shaped in the totality thereof. Depending on the physical properties (changes in thermal strength) of the process product, however, the hollow stirring means 30 may be attached to the hollow shaft 20, in appropriate combinations with stirring means of other shapes, although as pointed out above, it is preferable to use a disc-shaped stirring means, from the viewpoint of ensuring heat transfer surfaces.

An instance will be explained next in which a granular starting material is dried using the above drying device.

Firstly, the interior of the casing 1 of the drying device is brought down to a predetermined reduced pressure state and a predetermined heated state. To that end, the hollow shaft 20 is rotated by the motor 24 via the sprocket 23, and a heating medium such as steam or hot water is fed to the hollow shaft 20 from the rotary joint 25. The heating medium that is fed to the hollow shaft 20 flows into the internal space 35 of the hollow stirring means 30 from the primary chamber 20a of the hollow shaft 20, heats the stirring means 30 up, passes through the secondary chamber 20b of the hollow shaft 20, and is discharged from the discharge pipe 28 of the heating medium via the rotary joint 27 connected to rear of the hollow shaft. The exhaust pressure reducing unit 10 is operated to take air in from the exhaust port 5 that is provided in the casing 1, and thereby bring the interior of the casing 1 into a reduced pressure state. As a result of the above operation, the interior of the casing 1 is brought to a reduced pressure state at an absolute pressure of 4 to 30 kPa, and to a heated state at a temperature 15 to 120°C higher than the boiling point, under the above reduced pressure, of the moisture content (solvent) within the granular starting material.

Next, the granular starting material (may be a powder or granules) which is the process product is continuously supplied into the casing 1 from the supply port 3 of the drying device. The granular starting material to be supplied preferably has a median diameter (D50) in the range of 1 µm to 1000 µm, and a moisture content of 10 to 70 mass%. In a case where the granular starting material to be processed does not have the above median diameter or moisture content, preferably a pretreatment is performed as described above, to adjust the material to a granular starting material having the above median diameter or moisture content. Drying progresses in that the granular starting material, supplied into the casing 1 is heated while being stirred by the stirring means 30. At that time the granular starting material is heated under reduced pressure at an absolute pressure of 30 kPa or less, and at a temperature higher by 15°C or more than the boiling point of the solvent under the above reduced pressure, as a result of which a gas is generated from the interior of the granular material bed due to the instantaneous vaporization of the solvent, whereupon the powder bed takes on a fluidized state of rank 4 or 5 described above; in consequence, the generated gas moves readily, and the granular material not only moves but also maintains contact with the heating means, as a result of which drying with good efficiency is performed, with dramatically enhanced heat transfer efficiency.

The granular starting material inputted into the casing 1 gradually flows down in the interior of the casing 1 on account of the pressure derived from the filling height of the granular starting material that is continuously inputted from the supply port 3 and on account of the tilt of the casing 1; at the same time, the granular starting material undergoes the above efficient drying treatment, and moves towards the discharge port 4, whereupon the dried material is discharged, in an airtight state, via the airlock valve 8, and is recovered at the recovery hopper 9. The recovered granular material, which has a moisture content of 1.0 mass% or less, is a dry granular material having had volatile components such as VOCs reduced therefrom as much as possible.

Embodiments have been explained above that pertain to a method for drying a granular material, and to a drying device used in that drying method, according to the present invention, and further to a method for producing a granular material having a moisture content of 1.0 mass% or less, but the present invention is not limited in any way to the embodiments described above, and can accommodate, as a matter of course, various alterations and modifications within the scope of the technical idea of the present invention as set forth in the appended claims.

### Examples

Examples of the drying method according to the present invention will be described below, but the present invention is not meant to be limited to these examples in any way.

The airlock valve illustrated in Fig. 5 was attached to the supply port and discharge port of an NVD-3 model (uniaxial conduction heat transfer dryer, heat transfer surface area 3.4 m², volume 150 L) by Nara Machinery Co., Ltd. illustrated in Fig. 3 and Fig. 4, to produce a drying device capable of continuous processing at reduced pressure.

The stirring means had a disk shape, with the disk diameter set to 300 mm.

### -Example 1-

Water was added to a commercially available polyester ketone (D50: 648 µm, melting point: 300 to 360°C), to prepare a wet starting material having a moisture content of 20 mass%.

A continuous drying treatment was performed, using the above drying device, in accordance with the procedure below.

Steam was used as the heating medium, the temperature was set to 180°C, and the heating medium was caused to circulate. The pressure within the device was reduced down to 20 kPa. The boiling point of water in this case is 60°C, and ΔT is 120°C.

The peripheral speed of the outermost periphery of the disk was set to 0.3 m/s, the wet starting material was supplied at an input speed of 90 kg/h (dry powder basis), and continuous vacuum drying was initiated.

Once 30 minutes had elapsed since the drying process began stabilizing, the wet starting material had become fluidized within the device, and the powder surface exhibited a flat and smooth state. The fluidization rank at this time was "Rank 5" in the ranks given in Table 1. Fluidization of "Rank 4" or better was observed within a range of 80% from upstream in the path length.

Thirty minutes after the start, a continuous drying treatment was performed for 2 hours, to yield 180 kg (dry powder basis) of product powder having a moisture content of 0.3 mass%.

### -Examples 2 to 15 and Comparative Examples 1 to 5-

Wet starting materials given in Table 2 were prepared and subjected to a continuous drying treatment under the conditions given in Table 3, using the drying device described above.

### [Table 2]

### [Table 3]

Table 4 sets out the results of the drying treatment of each wet starting material.

### [Table 4]

In Comparative example 1, the powder surface was upset on account of stirring, and was not flat. The product moisture content was 8 mass%, which was much poorer than that in the examples.

Intermittent and localized gas blow-through (channeling) occurred in Comparative examples 2 and 3. The product moisture content was 3 mass%, which was poorer than that in the examples.

Intermittent and localized gas blow-through (channeling) occurred in Comparative example 4. The product moisture content was 23 mass%, which was much poorer than that in the examples.

In Comparative example 5, the powder surface was upset on account of stirring, and was not flat. The product moisture content was 3 mass%, which was poorer than that in the examples.

### [Industrial Applicability]

The method and device for drying a granular material, as well as the production method, according to the present invention, can be used in drying and producing of granular materials in a wide range of fields such as synthetic resins, foods and chemicals.

### Reference Signs List

- 1: Drying device casing
- 2: Support stand
- 3: Supply port
- 4: Discharge port
- 5: Exhaust port
- 6, 8: Airlock valve
- 7: Starting material hopper
- 9: Recovery hopper
- 10: Exhaust pressure reducing unit
- 11: Inflow port
- 12: Outflow port
- 13: Valve casing
- 14: Valve
- P: Process product
- 20: Hollow shaft
- 20a: Primary chamber
- 20b: Secondary chamber
- 21, 22: Bearing
- 23: Sprocket
- 24: Motor
- 25, 27: Rotary joint
- 26: Supply pipe
- 28: Discharge pipe
- 29: Partition plate
- 30: Hollow stirring means
- 31: Protrusion
- 32: Opening
- 33: Raking blade
- 34: Partition plate
- 35: Internal space
- 36, 37: Communication hole

**[Table 1]**

| Fluidization rank | Powder surface state during operation of dryer |
|---|---|
| 5 | Powder surface flat, and powder surface inclination angle (θ) of 10° or smaller. |
| 4 | Powder surface flat, and powder surface inclination angle (θ) larger than 10°, up to 20°. |
| 3 | Powder surface upset by stirring, not flat. Alternatively, powder surface inclination angle (θ) larger than 20°, up to 30°. |
| 2 | Powder surface upset by stirring, not flat. Alternatively, powder surface inclination angle (θ) larger than 30°. |
| 1 | Intermittent and localized gas blow-through (channeling) occurs. |

**[Table 2]**

| | Processed product | | | Solvent | Starting material moisture content (%) |
|---|---|---|---|---|---|
| | Name | D50(µm) | Melting point (°C) | | |
| Example 1 | Polyester ketone | 648 | 300∼360 | Water | 20 |
| Example2 | Same as Example 1 | | | | |
| Example3 | Same as Example 1 | | | | |
| Example4 | Phenoxybenzoyl | 14.9 | About 100°C | Methanol | 30 |
| Example5 | Acrylic resin | 40 | About 100°C | Water | 40 |
| Example6 | ABS resin | 250 | 100∼125 | Water | 30 |
| Example7 | Polypropylene resin | 65 | 168 | Acetone | 40 |
| Example8 | Synthetic resin (UHMWPE) | 190 | 120∼140 | Decane | 30 |
| Example9 | Synthetic resin (UHMWPE) | 30 | 120∼140 | Decane | 40 |
| Example10 | Polypropylene resin | 65 | 168 | Acetone | 23 |
| Example11 | Ziegler-Natta catalyst | 3 | 50 | Hexane | 70 |
| Example12 | PTFE resin | 18 | 160 | Water | 20 |
| Example13 | PVC resin | 150 | 85∼100 | Water | 22 |
| Example14 | Acrylic resin | 36 | About 100°C | Water | 60 |
| Example15 | Polycarbonate resin | 880 | 150 | Water | 10 |
| Comparative example1 | Ziegler-Natta catalyst | 3 | 50 | Hexane | 70 |
| Comparative example2 | Same as Example 1 | | | | |
| Comparative example3 | Same as Example 1 | | | | |
| Comparative example4 | Polypropylene resin | 65 | 168 | Acetone | 37 |
| Comparative example5 | Polycarbonate resin | 1100 | 150 | Water | 10 |

**[Table 3]**

| | Reduced pressure conditions (kPa) | Solvent boiling point (°C) under reduced pressure conditions | Heating medium temperature (°C) | ΔT (°C) |
|---|---|---|---|---|
| Example1 | 20 | 60.0 | 180.0 | 120.0 |
| Example2 | 30 | 70.0 | 140.0 | 70.0 |
| Example3 | 30 | 70.0 | 110.0 | 40.0 |
| Example4 | 20 | 28.0 | 120.0 | 92.0 |
| Example5 | 15 | 54.0 | 90.0 | 36.0 |
| Example6 | 20 | 60.0 | 90.0 | 30.0 |
| Example7 | 18 | 14.0 | 80.0 | 66.0 |
| Example8 | 13 | 108.0 | 125.0 | 17.0 |
| Example9 | 4 | 78.0 | 110.0 | 32.0 |
| Example10 | 6 | 10 | 79 | 69 |
| Example11 | 20 | 25 | 50 | 25 |
| Example12 | 20 | 60 | 170 | 110 |
| Example13 | 9 | 44 | 90 | 46 |
| Example14 | 20 | 54 | 90 | 36 |
| Example15 | 20 | 60 | 140 | 80 |
| Comparative example1 | 20 | 25.0 | 35 | 10.0 |
| Comparative example2 | Normal pressure | 100.0 | 180.0 | 80.0 |
| Comparative example3 | Normal pressure | 100.0 | 160.0 | 60.0 |
| Comparative example4 | Normal pressure | 56 | 79 | 23 |
| Comparative example5 | 20 | 60 | 155 | 95 |

**[Table 4]**

| | Process product supply amount (kg/hr) (dry powder basis) | Fluidization rank | Fluidization range | Moisture content after processing (mass%) |
|---|---|---|---|---|
| Example1 | 90 | 5 | 80% of path length | 0.3 |
| Example2 | 50 | 4 | 80% of path length | 0.3 |
| Example3 | 20 | 4 | 80% of path length | 0.3 |
| Example4 | 75 | 5 | 70% of path length | 0.05 |
| Example5 | 46 | 5 | 80% of path length | 1.0 |
| Example6 | 40 | 5 | 50% of path length | 0.5 |
| Example7 | 36 | 5 | 70% of path length | 0.1 |
| Example8 | 120 | 5 | 60% of path length | 0.8 |
| Example9 | 100 | 5 | 60% of path length | 0.1 |
| Example10 | 80 | 5 | 70% of path length | 0.8 |
| Example11 | 8 | 4 | 50% of path length | 0.5 |
| Example12 | 160 | 5 | 80% of path length | 0.3 |
| Example13 | 100 | 5 | 80% of path length | 0.2 |
| Example14 | 46 | 4 | 70% of path length | 1.0 |
| Example15 | 250 | 5 | 80% of path length | 1.0 |
| Comparative example1 | 8 | 1 | - | 8.0 |
| Comparative example2 | 60 | 1 | - | 3.0 |
| Comparative example3 | 40 | 1 | - | 3.0 |
| Comparative example4 | 14 | 1 | - | 23.0 |
| Comparative example5 | 300 | 2 | - | 3.0 |

## Claims

1. A granular material drying method, in which a granular starting material is continuously supplied, and under reduced pressure, a heating medium is supplied to a stirring means, to subject the granular starting material to a drying treatment through heating while under stirring,
the method comprising, with a median diameter (D50) of the granular starting material ranging from 1 µm to 1000 µm and under reduced pressure at an absolute pressure of 4 to 30 kPa, performing a drying treatment by fluidizing the granular starting material, through heating with the heating medium at a temperature 15 to 120°C higher than the boiling point of a solvent in the granular starting material under the reduced pressure.

2. The granular material drying method according to claim 1, wherein a moisture content of the granular starting material is from 10 to 70 mass%.

3. A granular material drying device, used in the granular material drying method according to claim 1, the drying device comprising: a casing; a supply port provided at a top of one end of the casing; and a discharge port provided at a bottom of another end of the casing, wherein
the casing is connected to a pressure reducing means capable of depressurizing the interior of the casing, a rotatable hollow shaft is spanned within the casing, a hollow stirring means is disposed at predetermined intervals in the hollow shaft, and a granular starting material is heated under reduced pressure and under stirring, through supply of a heating medium to the hollow shaft and hollow stirring means.

4. The granular material drying device according to claim 3, comprising an airlock valve including a valve casing provided at a supply port and a discharge port of the casing and having an inflow port opened upward and an outflow port opened downward; and a valve that is rotatably provided at a position for closing the inflow port and at a position for closing the outflow port within the valve casing, the airlock valve being able to supply and discharge a granular material in an airtight state through rotation of the valve.

5. A granular material production method comprising producing a granular material that has a moisture content of 1.0 mass% or less in accordance with the granular material drying method according to claim 1 or 2.
